# EUROPEAN PATENT APPLICATION

(11) **EP 1 884 538 A1**
(43) Date of publication of application: **06.02.2008**
(21) Application number: 06118409.9
(22) Date of filing: 03.08.2006
(51) Int. Cl.: C08K 7/14, C08L 71/00, C08L 81/06

(54) **New polymer composition**

(71) Applicant: Solvay Advanced Polymers, L.L.C., Alpharetta, GA 30005-3914 (US)
(72) Inventor: WEINBERG, Shari, ATLANTA, GA 30324 (US); SHORROCK, Shawn, CUMMING, GA 30040 (US); EL-HIBRI, Mohammad Jamal, ATLANTA, GA 30328 (US)
(74) Representative: Jacques, Philippe

(57) **Abstract**

Disclosed is a polymer composition (C) comprising
- a poly(aryl ether ketone) (P1) chosen from polyetheretherketones, polyetherketoneketones and polyetheretherketone-polyetherketoneketone copolymers,
- a polyphenylsulfone (P2), and
- a reinforcing fiber (F),
with the exception of
a polymer composition consisting of
- 90 wt %, based on total polymer composition, of a polymer blend consisting of 85 parts by weight of a polyphenylsulfone and 15 parts by weight of a polyetheretherketone, and
- 10 wt %, based on total polymer composition, of glass fiber.

## Description

### FIELD OF THE INVENTION

The present invention relates to a new reinforced polymer composition.

### BACKGROUND OF THE INVENTION

Poly(biphenyl ether sulfone)s, in particular polyphenylsulfones (PPSU), are amorphous technopolymers which are materials of choice notably for the ultimate in toughness, with with rather good stiffness, rather good chemical resistance, superior to most of commercially available transparent resins but lower than that of ultra-performance polymers like poly(aryl ether ketone)s.

Precisely, poly(aryl ether ketone)s, in particular polyetheretherketones (PEEK) and polyetherketoneketones (PEKK) offer an exceptional balance of technical properties, namely high melting point, excellent thermal stability, high stiffness and strength, good toughness and really excellent chemical resistance, including excellent resistance to environmental stress rupture resistance.

However, for certain applications, a high level of stiffness is further required, which cannot be achieved with a poly(aryl ether ketone) taken alone, and, a fortiori with a poly(biphenyl ether sulfone) taken alone. A known solution, among others, consists in incorporating a reinforcing filler to the neat polymer. Non limitative examples of reinforcing fillers include particulate fillers like nanoclays, and fibrous fillers like glass fibers and carbon fibers. Thus, for example, certain glass-filled PEEKs have been developed and found a certain commercial success.

Yet, as concerns said glass-filled PEEKs and more generally reinforced poly(aryl ether ketone)s, their high cost (which is due to the high cost of the poly(aryl ether ketone)s themselves), remains often dissuasive, refraining the skilled person from using them as widely as technically desirable for the encompassed applications (shaped articles), in particular when, a high initial stiffness is mandatory and must be retained inasmuch as possible after the shaped articles or at least some part(s) thereof are contacted, temporarily or permanently, with an aggressive chemical environment, and, more particularly when the shaped articles or at least some part(s) thereof are in addition submitted, temporarily or permanently, to stress.

An additional remaining problem is that, in certain demanding applications, glass-filled PEEKs, and more generally reinforced poly(aryl ether ketone)s, do not retain a sufficiently high level of properties, in particular a sufficiently high level of stiffness when they are submitted to an aggressive chemical environment, and, more particularly when the shaped articles or at least some part(s) thereof are in addition submitted, temporarily or permanently, to stress.

There remains thus a strong need for a composition of matter exhibiting a level of properties (in particular, but not limited to, a chemical resistance) substantially the same, and preferably higher, to the one typically achieved with reinforced poly(aryl ether ketone)s, and at a lower cost than that of said reinforced poly(aryl ether ketone)s.

The challenge appeared tricky for the Applicant, notably in view of the teachings of U.S. 4,804,724, as commented below.

U.S. 4,804,724, the whole content of which is herein incorporated by reference, describes unreinforced blends comprising a poly(aryl ether ketone) and a poly(biphenyl ether sulfone). As expected, these blends, at intermediate compositions (such as 50 parts of PPSU and 50 parts of PEEK), exhibit intermediate properties, in particular an intermediate stiffness (modulus) and an intermediate chemical resistance (including an intermediate environmental stress rupture resistance) in certain chemical environments (ethyl acetate, 1,1,1-trichloroethane, toluene and acetone) in the range between the (high) chemical resistance of the poly(aryl ether ketone) and the (substantially lower) chemical resistance of the poly(biphenyl ether sulfone). Thus, in short, the skilled in the art, in view of the teachings of U.S.'724, would have understood that replacing part of the poly(aryl ether ketone) contained in a poly(aryl ether ketone) composition, whatever reinforced or not, by a usually more cost-attractive polymer, in particular a poly(biphenyl ether sulfone), should not be an appropriate means to solve the complex problem of reducing the cost of the poly(aryl ether ketone) composition while substantially maintaining or even increasing the chemical resistance conferred by the poly(aryl ether ketone).

U.S. 5,916,958 addresses the problem of improving the flame retardancy of poly(biphenyl ether sulfone) compositions, including but not limited to PPSU compositions ; to solve this problem, a fluorocarbon polymer and titanium dioxide should be added to the poly(biphenyl ether sulfone)composition. Optionally, the poly(biphenyl ether sulfone) compositions of US'958 comprise further a poly(aryl ether ketone), including but not limited to PEEK and PEKK. Other optional ingredients include fibrous fillers like glass fiber, as well as particulate fillers such as wollastonite, talc, silica and the like. US 5,916,958 does not disclose any composition that would specifically comprise a poly(biphenyl ether sulfone), a poly(aryl ether ketone and a fibrous filler, except comparative example N, which relates to a composition consisting of (i) 90 wt %, based on total composition, of a polymer blend consisting of 85 parts by weight of a polyphenylsulfone (RADEL(r) R 5000 grade) and 15 parts by weight of a polyetheretherketone (VICTREX(r) PEEK grade 150 P), and (ii) 10 wt %, based on total composition, of glass fiber. As earlier mentioned, this example is provided as comparative example, for the sole purpose of demonstrating that glass fiber makes it possible to achieve good heat release properties, even in the absence of fluorocarbon polymer and TiO2, but would cause unacceptable unscratched impact values. This disclosure is totally unrelated with the complex problem addressed by the present invention.

### THE INVENTION

The Applicant has found that the complex problem of providing a composition of matter exhibiting a level of properties (in particular, but not limited to, a chemical resistance) substantially the same, and preferably higher, to the one typically achieved with reinforced poly(aryl ether ketone)s, at a lower cost than that of said reinforced poly(aryl ether ketone)s, is quite unexpectedly solved by a polymer composition (C) comprising :
- a poly(aryl ether ketone) chosen from polyetheretherketones, polyetherketoneketones and polyetheretherketone-polyetherketoneketone copolymers,
- a diluent chosen from polyphenylsulfones, and
- a reinforcing filler chosen from reinforcing fibers.

Thus, an aspect of the present invention is directed to a polymer composition (C) comprising
- a poly(aryl ether ketone) (P1) chosen from polyetheretherketones, polyetherketoneketones and polyetheretherketone-polyetherketoneketone copolymers,
- a polyphenylsulfone (P2), and
- a reinforcing fiber (F),
with the exception of
a polymer composition consisting of
- 90 wt %, based on total polymer composition, of a polymer blend consisting of 85 parts by weight of a polyphenylsulfone and 15 parts by weight of a polyetheretherketone, and
- 10 wt %, based on total polymer composition, of glass fiber.

Another aspect of the present invention is directed to a shaped article comprising the polymer composition (C) as above described.

Still another aspect of the present invention is directed to the use of a polyphenylsulfone (P2) for diluting a poly(aryl ether ketone) (P1) chosen from polyetheretherketones, polyetherketoneketones and polyetheretherketone-polyetherketoneketone copolymers,
said poly(aryl ether ketone) being contained in a polymer composition (C) which, before being diluted with the polyphenylsulfone (P2), consists of the poly(aryl ether ketone) (P1), a reinforcing fiber (F) and, optionally in addition, one or more ingredients other than the poly(aryl ether ketone) (P1), the polyphenylsulfone (P2) and the reinforcing fiber (F),
while substantially maintaining or increasing the chemical resistance of the polymer composition (C) in a chemical environment which is more aggressive against the polyphenylsulfone (P2) than against the poly(aryl ether ketone) (P1).

According the above aspect, the polymer composition may be notably in the form of a shaped article or part of a shaped article.

### DETAILED DESCRIPTION OF THE INVENTION

The weight of the poly(aryl ether ketone) (P1), based on the total weight of the poly(aryl ether ketone) (P1) and the polyphenylsulfone (P2), is advantageously above 20 %, preferably above 30 %, more preferably above 40 % and still more preferably above 45 %. On the other hand, the weight of the poly(aryl ether ketone) (P1), based on the total weight of the poly(aryl ether ketone) (P1) and the polyphenylsulfone (P2), is advantageously below 80 %, preferably below 70 %, is more preferably below 60 % and still more preferably below 55 %.

The total weight of the poly(aryl ether ketone) (P1) and the polyphenylsulfone (P2), based on the total weight of the polymer composition (C), is advantageously above 35 %, preferably above 55 % and more preferably above 65 %. On the other hand, the total weight of the poly(aryl ether ketone) (P1) and the polyphenylsulfone (P2), based on the total weight of the polymer composition (C), is advantageously below 85 %, preferably below 80 , more preferably below 75 %, and still more preferably at most 70 %.

The weight of the poly(aryl ether ketone) (P1), based on the total weight of the polymer composition (C), is advantageously above 15 %, preferably above 25 %, and more preferably above 30 %. On the other hand, the weight of the poly(aryl ether ketone) (P1), based on the total weight of the polymer composition (C), is advantageously below 50 %, preferably below 45 %, more preferably below 40 % and still more preferably at most 35 %.

The weight of the polyphenylsulfone (P2), based on the total weight of the polymer composition (C), is advantageously above 15 %, preferably above 25 %, and more preferably above 30 %. On the other hand, the weight of the polyphenylsulfone (P2), based on the total weight of the polymer composition (C), is advantageously below 50 %, preferably below 45 %, more preferably below 40 % and still more preferably at most 35 %.

The amount of reinforcing fiber, based on the total weight of the polymer composition (C), is advantageously above 12 wt %, preferably above 18 wt % and more preferably above 24 wt %. On the other hand, the amount of reinforcing fiber, based on the total weight of the polymer composition (C), is advantageously below 60 wt %, preferably below 48 wt %, more preferably below 36 wt %, and still more preferably at most 30 wt %.

### The poly(aryl ether ketone) (P1).

As previously mentioned, the polymer composition (C) contains a poly(aryl ether ketone) (P1) chosen from polyetheretherketones, polyetherketoneketones and polyetheretherketone-polyetherketoneketone copolymers.

For the purpose of the present invention, the term "polyetheretherketone" is intended to denote any polymer of which more than 50 wt % of the recurring units are recurring units of formula

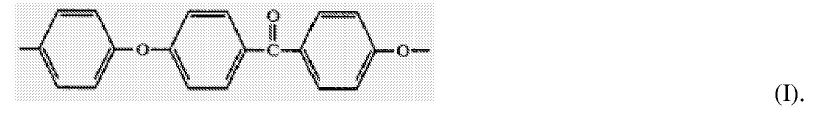

For the purpose of the present invention, the term "polyetherketoneketone" is intended to denote any polymer of which more than 50 wt % of the recurring units are recurring units of formula

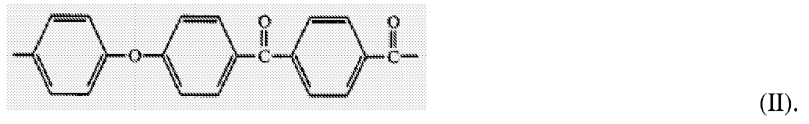

For the purpose of the present invention, the term "polyetheretherketone-polyetherketoneketone copolymer" is intended to denote any polymer of which no more than 50 wt % of the recurring units are of formula 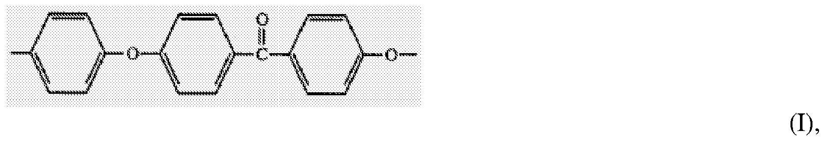 and no more than 50 wt % of the recurring units are of formula 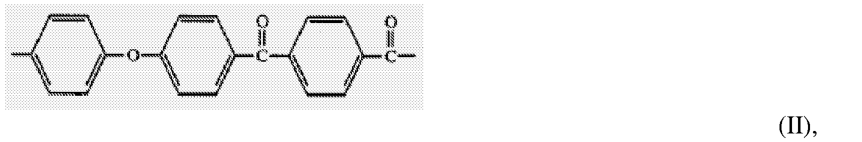 but more than 50 wt % of the recurring units are recurring units chosen from recurring units (I) and (II).

For the purpose of the present invention, recurring units (I) and (II) are globally referred to as recurring units (R1).

The poly(aryl ether ketone) (P1) is preferably a polyetheretherketone.

The poly(aryl ether ketone) (P1) may be notably a homopolymer, a random, alternate or block copolymer. When the poly(aryl ether ketone) (P1) is a copolymer, its recurring units may notably be composed of (i) recurring units (R1) of formulae (I) and (II), or (ii) recurring units (R1) of one or more formulae (I) and (II) and recurring units (R1*) different from recurring units (R1),
such as : 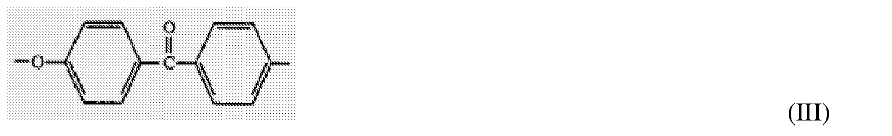 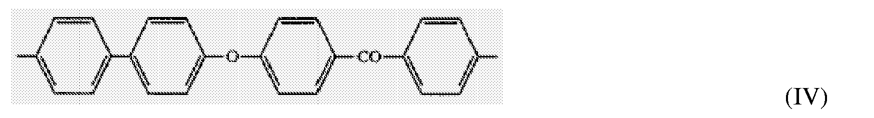 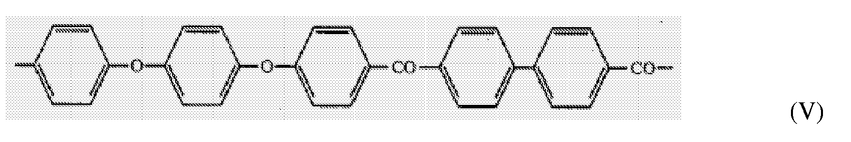 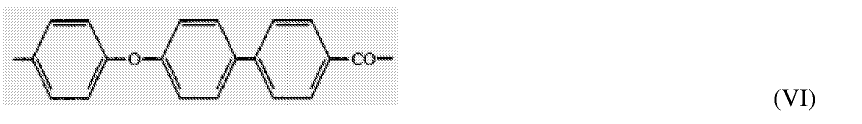 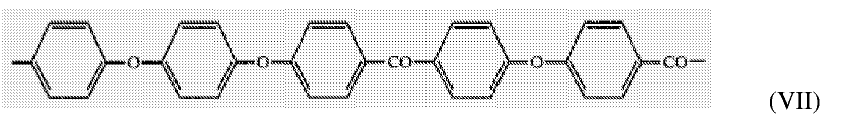 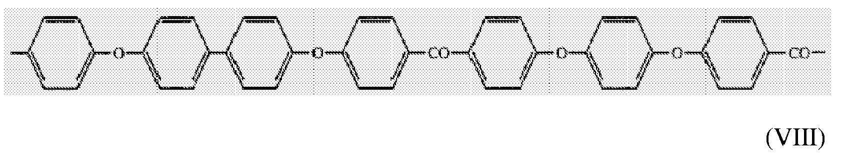 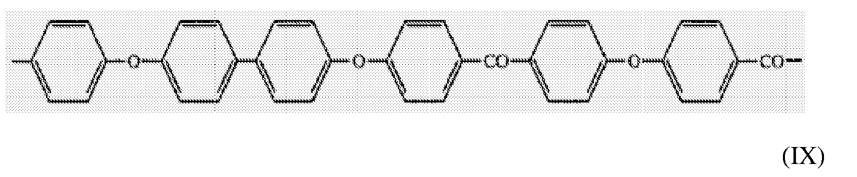 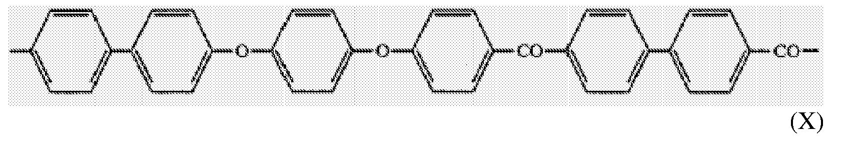 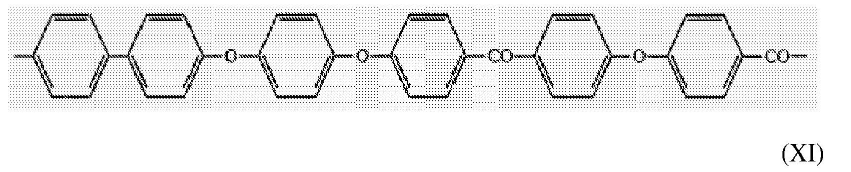 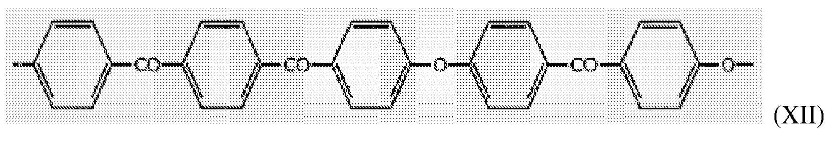 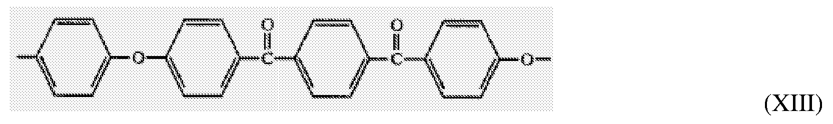 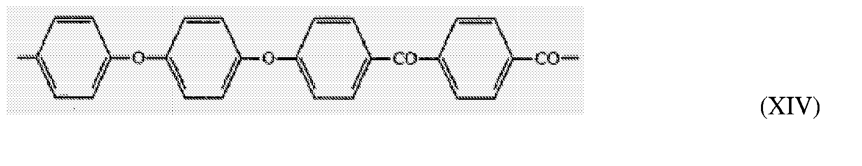 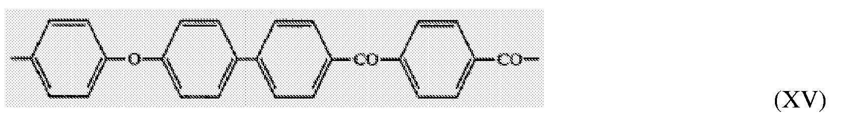 and

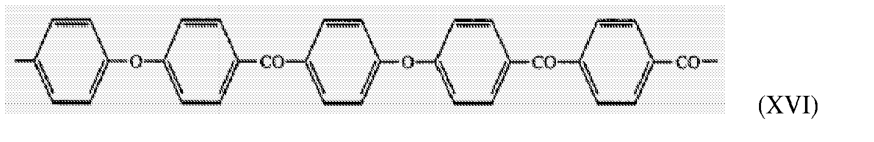

Preferably more than 70 wt %, and more preferably more than 85 wt % of the recurring units of the poly(aryl ether ketone) (P1) are recurring units (R1). Still more preferably, essentially all the recurring units of the poly(aryl ether ketone) (P1) are recurring units (R1). The most preferably, all the recurring units of the poly(aryl ether ketone) (P1) are recurring units (R1).

The poly(aryl ether ketone) (P1) has advantageously a reduced viscosity (RV) of at least 0.60 dl/g, as measured in 95-98 % sulfuric acid (d= 1.84 g/ml) at a poly(aryl ether ketone) concentration of 1 g/100 ml. The measurement is performed using a No 50 Cannon-Fleske viscometer. RV is measured at 25°C in a time less than 4 hours after dissolution, to limit sulfonation. The RV of the poly(aryl ether ketone) (P1) is preferably of at least 0.65 dl/g, more preferably of at least 0.70 dl/g. Besides, the RV of the poly(aryl ether ketone) (P1) is advantageously of at most 1.20 dl/g and preferably at most 1.10 dl/g. In certain instances, the best results are obtained when the poly(aryl ether ketone) (P1) has a RV of from 0.70 to 0.90 dl/g ; in certain other instances, the best results are obtained when the poly(aryl ether ketone) (P1) has a RV of from 0.90 to 1.10 dl/g.

The poly(aryl ketone) (P1) can be prepared by any method.

One well known in the art method contains reacting a substantially equimolar mixture of at least one bisphenol and at least one dihalobenzoid compound or at least one halophenol compound as described in Canadian Pat. No. 847,963. Preferred bisphenols in such a process are hydroquinone, 4,4'-dihydroxybiphenyl and 4,4'-dihydroxybenzophenone ; preferred dihalobenzoid compounds in such a process are 4,4'-difluorobenzophenone, 4,4'-dichlorobenzophenone and 4-chloro-4'-fluorobenzophenone ; preferred halophenols compounds in such a process are 4-(4-chlorobenzoyl)phenol and (4-fluorobenzoyl)phenol. Accordingly, PEEK homopolymers may notably be produced by the nucleophilic process as described in, for example, U.S. Pat. No. 4,176,222, the whole content of which is herein incorporated by reference.

Another well known in the art method to produce PEEK homopolymers comprises electrophilically polymerizing phenoxyphenoxybenzoic acid or the like, using an alkane sulfonic acid as solvent and in the presence of a condensing agent, as the process described in U.S. Pat. 6,566,484, the whole content of which is herein incorporated by reference. Other poly(aryl ether ketone)s may be produced by the same method, starting from other monomers than phenoxyphenoxybenzoic acid, such as those described in U.S. Pat. Appl. 2003/0130476, the whole content of which is also herein incorporated by reference.

### The polyphenylsulfone (P2).

For the purpose of the invention, a polyphenylsulfone is intended to denote a polycondensation polymer of which more than 50 wt % of the recurring units are recurring units (R2) of formula

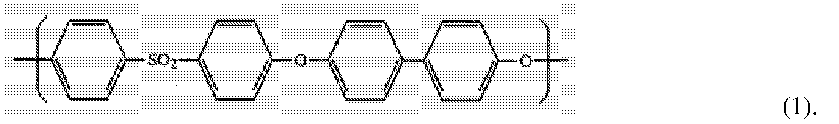

The polyphenylsulfone (P2) may be notably a homopolymer, a random, alternate or block copolymer. When the polyphenylsulfone (P2) is a copolymer, its recurring units may notably be composed of recurring units (R2) of formula (1) and recurring units (R2*), different from recurring units (R2), such as : 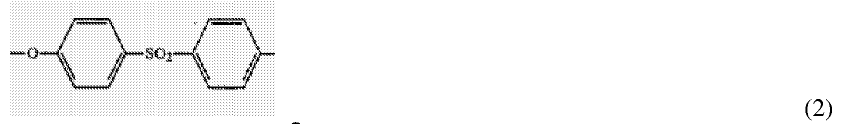 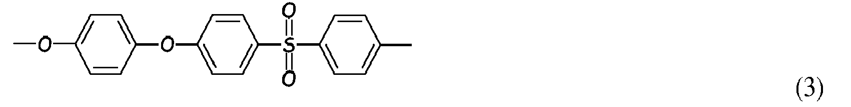 and

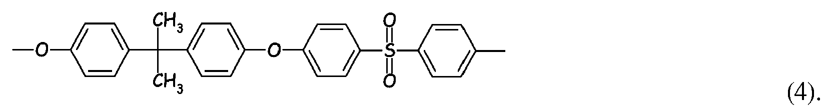

Preferably more than 70 wt %, and more preferably more than 85 wt % of the recurring units of the polyphenylsulfone (P2) are recurring units (R2). Still more preferably, essentially all the recurring units of the polyphenylsulfone (P2) are recurring units (R2). The most preferably, all the recurring units of the polyphenylsulfone (P2) are recurring units (R2), i.e. polyphenylsulfone is a homopolymer. RADEL^{®} R polyphenylsulfones from Solvay Advanced Polymers, L.L.C. are examples of commercially available polyphenylsulfone homopolymers.

The polyphenylsulfone (P2) can be prepared by any method. Methods well known in the art are those described in U.S. Pat. Nos. 3,634,355; 4,008,203; 4,108,837 and 4,175,175, the whole content of which is herein incorporated by reference.

### The reinforcing fiber.

Quite surprisingly, the presence of a reinforcing fiber in a polymer composition comprising a polyphenylsulfone and a poly(aryl ether ketone) chosen from polyetheretherketones, polyetherketoneketones and polyetheretherketone-polyetherketoneketone copolymers, causes said polyphenylsulfone and said poly(aryl ether ketone) to work synergistically.

Concretely, the polymer composition (C) exhibits certain properties at an improved level with regard to (i) the level achieved by the polymer composition obtained by replacing totally, weight pro weight, in the polymer composition (C), the poly(aryl ether ketone) by the polyphenylsulfone, and, (ii) the level achieved by the polymer composition obtained by replacing totally, weight pro weight, in the polymer composition (C), the polyphenylsulfone by poly(aryl ether ketone).

An especially valuable example of property for which this synergistic effect is observed is the Young modulus after exposure, under stress, to a chemically aggressive environment. Accordingly, the polymer composition (C) has a Young modulus after exposure, under stress, to a chemically aggressive environment, greater than the Young modulus of the corresponding poly(aryl ether ketone) composition and, a fortiori, greater than the Young modulus of the polyphenylsulfone composition.

Further, even when, strictly speaking, no synergistic effect is observed for a certain particular property, a surprisingly good level of property is however usually achieved, namely a level which is substantially equal to the level of property achieved with the most performing unblended polymer (usually, the poly(aryl ether ketone), as explained in the "Background" section of the present specification).

Any reinforcing fiber is desirable. The skilled person will easily recognize the reinforcing fiber which fits best its composition and encompassed end uses. Generally, the reinforcing fiber is chosen depending on its chemical nature, its length, diameter, ability to feed nicely in compounding equipment without bridging and surface treatment (notably because good interfacial adhesion between the reinforcing fiber and the polymer improves the stiffness and the toughness of the blend).

Non limitative examples of suitable reinforcing fibers include glass fibers, asbestos, graphitic carbon fibers some of them having possibly a graphite content of above 99 %, amorphous carbon fibers, pitch-based carbon fibers, PAN-based carbon fibers, synthetic polymeric fibers, aluminum fibers, aluminum silicate fibers, oxide of metals of such aluminum fibers, titanium fibers, magnesium fibers, rock wool fibers, steel fibers, silicon carbide fibers, boron fibers and so on.

Preferably, the reinforcing fiber is chosen from glass fibers and carbon fibers. More preferably, it is glass fiber.

The reinforcing fiber, in particular the glass fiber, has a diameter preferably below 40 µm : the Applicant has observed this resulted in increased reinforcement. More preferably, its diameter is below 20 µm, and still more preferably below 15 µm. On the other hand, the diameter of the reinforcing fiber, in particular the glass fiber, is preferably above 5 µm.

The reinforcing fiber, in particular the glass fiber, has a length preferably of below 20 mm, more preferably below 10 mm. Besides, it has a length of preferably above 1 mm, more preferably above 2 mm.

Preferably, the reinforcing fiber, in particular the glass fiber, is formulated with a high temperature sizing, since said high temperature sizing provides superior interfacial adhesion with polymers that require generally to be processed at high temperatures, like PEEK, PEKK and PPSU.

Especially well-suited reinforcing fibers are CERTAINTEED(r) 910 from VETROTEX SAINT-GOBAIN and equivalents thereof.

### Optional ingredients of the polymer composition (C).

The polymer composition (C) may further contain conventional ingredients of poly(aryl ether ketone) and poly(aryl ether sulfone) compositions, including lubricating agents, heat stabilizers, anti-static agents, extenders, organic and/or inorganic pigments like TiO₂, carbon black, acid scavengers, such as MgO, stabilizers, i.e., metal oxides and sulfides such as zinc oxide and zinc sulfide, antioxidants, flame retardants, smoke-suppressing agents, and particulate fillers and nucleating agents such as talc, mica, titanium dioxide, kaolin and the like.

The weight of said optional ingredients, based on the total weight of polymer composition (C), ranges advantageously from 0 to 15 %, preferably from 0 to 10 % and more preferably from 0 to 5 %.

### Embodiment (E1).

In a certain embodiment of the present invention, a pigmented polymer composition (C) is desirable. The case being, the pigment is preferably zinc sulfide. The Applicant has found, that zinc sulfide, contrarily to other widely used pigments such as titanium dioxide, worked especially well in combination with reinforcing fibers, in particular with glass fibers. In particular, and contrarily to titanium dioxide, zinc sulfide had no "scribing effect" and did not cause the reinforcing fiber to break, which would have otherwise resulted in an undesirable loss of strength. According to this embodiment, zinc sulfide is preferably present in a weight amount of below 10 %, and more preferably at most 5 %, based on the total weight of the polymer composition (C) ; on the other hand, zinc sulfide is preferably present in a weight amount of at least 1 %, and preferably at least 2 % based on the total weight of the polymer composition (C).

### Embodiment (E2).

In a certain other embodiment of the invention, the amounts of the ingredients of the polymer composition (C), in their preferred ranges of value, may differ from those above detailed, which were optimized to achieve the best balance of properties for most general end uses.

While the polymer composition (C) according to embodiment (E2) can be used profitably in various applications, it is especially well suited for certain particular applications, especially for compressor plates.

Specifically according to embodiment (E2), we have that:
- the weight of the poly(aryl ether ketone) (P1), based on the total weight of the poly(aryl ether ketone) (P1) and the polyphenylsulfone (P2), is advantageously above 20 %, preferably above 30 %, more preferably above 40 %, still more preferably above 45 %, even more preferably above 50 % and the most preferably greater than or equal to 60 % ; on the other hand, the weight of the poly(aryl ether ketone) (P1), based on the total weight of the poly(aryl ether ketone) (P1) and the polyphenylsulfone (P2), is advantageously below 80 %, and preferably below 70 % ;
- the total weight of the poly(aryl ether ketone) (P1) and the polyphenylsulfone (P2), based on the total weight of the polymer composition (C), is advantageously above 35 %, preferably above 55 % and more preferably above 65 % ; on the other hand, the total weight of the poly(aryl ether ketone) (P1) and the polyphenylsulfone (P2), based on the total weight of the polymer composition (C), is advantageously below 85 %, preferably below 80 and more preferably below 75 % ;
- the weight of the poly(aryl ether ketone) (P1), based on the total weight of the polymer composition (C), is advantageously above 15 %, preferably above 25 %, more preferably above 30 %, still more preferably above 35 % and the most preferably above 40 % ; on the other hand, the weight of the poly(aryl ether ketone) (P1), based on the total weight of the polymer composition (C), is advantageously below 50 % and preferably at most 45 % ;
- the weight of the polyphenylsulfone (P2), based on the total weight of the polymer composition (C), is advantageously above 15 %, preferably above 20 % and more preferably of at least 25 % ; on the other hand, the weight of the polyphenylsulfone (P2), based on the total weight of the polymer composition (C), is advantageously below 50 %, preferably below 45 %, more preferably below 40 %, still more preferably at most 35 % and the most preferably at most 30 % ;
- the amount of reinforcing fiber, based on the total weight of the polymer composition (C), is advantageously above 12 wt %, preferably above 18 wt % and more preferably above 24 wt % ; on the other hand, the amount of reinforcing fiber, based on the total weight of the polymer composition (C), is advantageously below 60 wt %, preferably below 48 wt %, and more preferably below 36 wt %, and still more preferably at most 30 wt %.

The polymer composition (C) is advantageously prepared by any conventional mixing method. A preferred method contains dry mixing the ingredients of the invented polymer composition of concern in powder or granular form, using e.g. a mechanical blender, then extruding the mixture into strands and chopping the strands into pellets.

Non limitative examples of shaped articles or part of shaped articles in accordance with the present invention include parts of aircraft passenger service units, air return grills in aircrafts, parts of aicraft heating systems, parts of aircraft ventilation systems, parts encapsulating a dry transformer or a motor coil, food service equipments, dental cases, medical instruments, plumbing fittings, fixtures and compressor plates.

### The chemical environment.

The polymer composition is susceptible of being temporarily or permanently in contact with the chemical environment ; often, such temporary or permanent contact is effectively achieved.

Non limitative examples of chemical media susceptible of constituting or being part of the chemical environment include : carboxylic acid esters, carboxylic acids, glycol ethers, aliphatic hydrocarbons, aromatic hydrocarbons such as benzene and toluene, monostyrene, phenols, epoxies, epoxy precursors such as propylene glycol monoether and ethylene glycol diglycidyl ether, ketones like methyl ethyl ketone and acetone, chlorinated hydrocarbons like methylene chloride, chloroform and carbon tetrachloride and aqueous solutions of inorganic acids such as nitric acid and sulfuric acid.

In certain embodiments of the present invention, the polymer composition is not submitted to stress.

In certain other embodiments of the present invention, the polymer composition is submitted to stress ; the case being, it may be submitted to stress either temporarily or permanently.

The present invention is described in greater detail below by referring to the examples ; however, the present invention is not limited to these examples.

### Example 1.

A first polymer composition (C) was prepared according to the present invention :

| | |
|---|---|
| RADEL^{®} R-5100 NT polyphenylsulfone | 34.0 % |
| VICTREX^{®} 150 P polyetheretherketone | 34.0 % |
| CERTAINTEED^{®} 910 P glass fiber | 29.0 % |
| Zinc sulfide | 3.0 % |

The polyphenylsulfone, the polyetherketone, the glass fiber and the zinc sulfide were mixed and melt compounded using a 25 mm diameter twin screw double vented Berstorff extruder having an L/D ratio of 33/1.

The examplified composition exhibited outstanding properties, as detailed in the specification.

### Example 2.

A second polymer composition (C) is prepared according to the present invention :

| | |
|---|---|
| RADEL^{®} R-5000 NT polyphenylsulfone | 34.0 % |
| VICTREX^{®} 450 P polyetheretherketone | 34.0 % |
| CERTAINTEED^{®} 910 P glass fiber | 29.0 % |
| Zinc sulfide | 3.0 % |

Thus, the polyphenylsulfone, the polyetherketone, the glass fiber and the zinc sulfide are mixed and melt compounded using a 25 mm diameter twin screw double vented Berstorff extruder having an L/D ratio of 33/1.

The examplified composition exhibits also outstanding properties, as generically reported in the specification.

### Example 3.

A third polymer composition (C) is prepared according to the present invention :

| | |
|---|---|
| RADEL^{®} R-5100 NT polyphenylsulfone | 25.9 % |
| VICTREX^{®} 150 P polyetheretherketone | 44.0 % |
| CERTAINTEED^{®} 910 P glass fiber | 30.0 % |
| Zinc oxide | 0.1 % |

Thus, the polyphenylsulfone, the polyetherketone, the glass fiber and the zinc oxide are mixed and melt compounded using a 25 mm diameter twin screw double vented Berstorff extruder having an L/D ratio of 33/1.

A compressor plate is made from the polymer composition. It exhibits outstanding properties.

### Example 4.

A fourth polymer composition (C) is prepared according to the present invention :

| | |
|---|---|
| RADEL^{®} R-5000 NT polyphenylsulfone | 25.9 % |
| VICTREX^{®} 450 P polyetheretherketone | 44.0 % |
| CERTAINTEED^{®} 910 P glass fiber | 30.0 % |
| Zinc oxide | 0.1 % |

Thus, the polyphenylsulfone, the polyetherketone, the glass fiber and the zinc oxide are mixed and melt compounded using a 25 mm diameter twin screw double vented Berstorff extruder having an L/D ratio of 33/1.

A compressor plate is made from the polymer composition. It exhibits also outstanding properties.

## Claims

1. - Polymer composition (C) comprising
- a poly(aryl ether ketone) (P1) chosen from polyetheretherketones, polyetherketoneketones and polyetheretherketone-polyetherketoneketone copolymers,
- a polyphenylsulfone (P2), and
- a reinforcing fiber (F),
with the exception of a polymer composition consisting of
- 90 wt %, based on total polymer composition, of a polymer blend consisting of 85 parts by weight of a polyphenylsulfone and 15 parts by weight of a polyetheretherketone, and
- 10 wt %, based on total polymer composition, of glass fiber.

2. - Polymer composition according to claim 1, **characterized in that** the weight of the poly(aryl ether ketone) (P1), based on the total weight of the poly(aryl ether ketone) (P1) and the polyphenylsulfone (P2), is above 40 %.

3. - Polymer composition according to claim 1 or 2, **characterized in that** the weight of the poly(aryl ether ketone) (P1), based on the total weight of the poly(aryl ether ketone) (P1) and the polyphenylsulfone (P2), is below 70 %.

4. - Polymer composition according to claim 3, **characterized in that** the weight of the poly(aryl ether ketone) (P1), based on the total weight of the poly(aryl ether ketone) (P1) and the polyphenylsulfone (P2), is below 60 %.

5. - Polymer composition according to claim 3, **characterized in that** the weight of the poly(aryl ether ketone) (P1), based on the total weight of the poly(aryl ether ketone) (P1) and the polyphenylsulfone (P2), is greater than or equal to 60 %.

6. - Polymer composition according to anyone of the preceding claims, **characterized in that** the total weight of the poly(aryl ether ketone) (P1) and the polyphenylsulfone (P2), based on the total weight of the polymer composition (C), is above 55 %.

7. - Polymer composition according to anyone of the preceding claims, **characterized in that** the amount of reinforcing fiber, based on the total weight of the polymer composition (C), is above 12 wt %.

8. - Polymer composition according to claim 7, **characterized in that** the amount of reinforcing fiber, based on the total weight of the polymer composition (C), is above 24 wt %.

9. - Polymer composition according to anyone of the preceding claims, **characterized in that** the poly(aryl ether ketone) (P1) is a polyetheretherketone.

10. - Polymer composition according to anyone of the preceding claims, **characterized in that** the reinforcing fiber is glass fiber.

11. - Shaped article comprising the polymer composition as claimed in anyone of the preceding claims.

12. - Use of a polyphenylsulfone (P2) for diluting a poly(aryl ether ketone) (P1) chosen from polyetheretherketones, polyetherketoneketones and polyetheretherketone-polyetherketoneketone copolymers,
said poly(aryl ether ketone) being contained in a polymer composition (C) which, before being diluted with the polyphenylsulfone (P2), consists of the poly(aryl ether ketone) (P1), a reinforcing fiber (F) and, optionally in addition, one or more ingredients other than the poly(aryl ether ketone) (P1), the polyphenylsulfone (P2) and the reinforcing fiber (F),
while substantially maintaining or increasing the chemical resistance of the polymer composition (C) in a chemical environment which is more aggressive against the polyphenylsulfone (P2) than against the poly(aryl ether ketone) (P1).
